Europäisches Patentamt

European Patent Office

Office européen des brevets

(19)

(11) Veröffentlichungsnummer: **0 235 656**
**B1**

(12) **EUROPÄISCHE PATENTSCHRIFT**

(45) Veröffentlichungstag der Patentschrift:
02.05.90

(51) Int. Cl.⁴: **G05B 19/04**

(21) Anmeldenummer: **87102153.1**

(22) Anmeldetag: **16.02.87**

(54) **Elektronische Steuereinrichtung.**

(30) Priorität: **27.02.86 DE 3606400**

(43) Veröffentlichungstag der Anmeldung:
**09.09.87 Patentblatt 87/37**

(45) Bekanntmachung des Hinweises auf die Patenterteilung:
**02.05.90 Patentblatt 90/18**

(84) Benannte Vertragsstaaten:
**CH DE FR IT LI SE**

(56) Entgegenhaltungen:
**FR-A- 2 559 287**
**US-A- 4 365 297**

(73) Patentinhaber: **Siemens Aktiengesellschaft,**
**Wittelsbacherplatz 2, D-8000 München 2(DE)**

(72) Erfinder: **Stöckel, Günter, Dipl.-Ing., Röthenbacher**
**Hauptstrasse 85, D-8500 Nürnberg 60(DE)**

ACTORUM AG

## Beschreibung

Die Erfindung bezieht sich auf eine elektronische Steuereinrichtung, bestehend aus

a) mindestens einer übergeordneten Zentraleinheit,

b) einzelnen Steuergeräten, die über ein Bussystem mit der Zentraleinheit verbunden sind, wobei jedes Steuergerät eine Busanschaltung für das Bussystem, Ein- und Ausgabebaugruppen für zu steuernde Elemente und eine Einzelsteuereinheit mit Prozessor und Programmspeicher enthält, in dem Steuerfunktionen hinterlegbar sind.

Mit diesem Oberbegriff wird auf eine Anordnung Bezug genommen, wie sie beispielsweise aus der US-PS 4 365 297 bekannt ist. Hier sind an einem Zentralrechner über ein Bussystem eine Reihe von einzelnen Computern angeschlossen, die ihrerseits wieder über Ein- und Ausgabebausteine auf zu steuernde Elemente einwirken. Die einzelnen Steuergeräte können dabei, wie beispielsweise die FR-PS 2 559 287 zeigt, interne Bussysteme haben. Die bekannte Anordnung ist relativ aufwendig. So müssen z.B. für Funktionsänderungen Speicherbausteine ausgetauscht werden.

Mit zunehmender Automatisierung in allen Bereichen der Industrie, z.B. in der Chemie, wird es aus Gründen der Verfügbarkeit immer wichtiger, bestimmte Standardfunktionen, wie z.B. Motoransteuerung, Ventilansteuerung usw., vom Zentralgerät weg in eine Einzelsteuerungsebene zu verlagern. In der Einzelsteuerungsebene können dann bei Ausfall der Zentraleinheit betrieblich erforderliche Vorgänge weiter gesteuert werden. Durch die Verwendung von Einzelsteuerungseinheiten (ESE) wird auch zusätzlich die Zentraleinheit von Standardfunktionen entlastet, so daß sie nur dann das Verbindungsglied zwischen den einzelnen Einzelsteuerungsebenen bilden muß. Damit wird die Zentraleinheit für andere Aufgaben, z.B. für Anzeigen des Prozeßzustandes, frei.

Zur Realisierung der Einzelsteuerungsebenen wurde bisher je nach Bedarf für jede Einzelfunktion eine besondere Baugruppe entwickelt oder die Aufgabe mit einer Mischung von diskreten Schaltungen und Sondersoftware in der Zentraleinheit gelöst. Hinsichtlich einer typischen derartigen Baugruppe sei beispielsweise auf eine Peripheriebaugruppe zur direkten Ansteuerung von Proportional- und Servoventilen hingewiesen, wie sie beispielsweise in der Zeitschrift Siemens-Energietechnik 1984, Heft 2, Seiten 54 bis 59 beschrieben ist. Ein anderer Weg ist die eingangs beschriebene Verwendung einer Vielzahl von zusätzlichen Computern.

Die Aufgabe der vorliegenden Erfindung besteht darin, im Rahmen der eingangs genannten Steuerung, sei sie auf Rechnerbasis realisiert oder in Form einer speicherprogrammierten Steuerung, dafür zu sorgen, daß auf einfache Weise verschiedene unterlagerte Einzelsteuerungseinheiten bzw. Funktionen realisiert werden können.

Diese Aufgabe wird erfindungsgemäß durch folgende Merkmale gelöst:

c) an die Busanschaltung sind die Ein- und Ausgabebaugruppen und die Einzelsteuereinheit angeschlossen, wobei die Einzelsteuereinheit aus einer intelligenten, den Prozessor und den Programmspeicher enthaltenden Baugruppe besteht, die einerseits an die Busanschaltung angekoppelt ist und andererseits an das interne Bussystem der Einzelsteuereinheit,

d) an das interne Bussystem der Einzelsteuereinheit sind weitere zur Einzelsteuereinheit gehörende Ein- und Ausgabebaugruppen angeschlossen und

e) im Programmspeicher der intelligenten Baugruppe der Einzelsteuereinheit sind eine Reihe von Steuerungsfunktionen hinterlegt, die durch die übergeordnete Zentraleinheit und/oder einen Wahlschalter in der intelligenten Baugruppe der Einzelsteuereinheit aktivierbar sind.

Die vorliegende Erfindung beruht auf einer intelligenten Kopfbaugruppe (Zentraleinheit) mit eigenem Spannungsanschluß, die je nach Anforderung an die Einzelfunktionen beliebig modular mit standardmäßigen digitalen und/oder analogen Ein-Ausgabebaugruppen erweitert und ausgebaut werden kann. In einer einfachen Version können die Ein-/ Ausgaben auch Bestandteil der Zentraleinheit sein. Die Zentraleinheit ist zweckmäßigerweise ein eigener Mikroprozessor, der die Koordinierungskommandos der Zentraleinheit über den Peripheriebus oder direkt über eine sonstige Datenschnittstelle erhält. Dieser Prozessor wertet diese Signale aus, verknüpft sie entsprechend der hinterlegten Funktion und schaltet sie auf den internen Bus der Einzelsteuereinheit durch. Da der Peripheriebus der Zentraleinheit und der interne Bus der Einzelsteuerebene voneinander elektrisch und mechanisch getrennt sind, kann für die Einzelsteuereinheit eine selbständige Fehlerdiagnose durchgeführt und z.B. über besondere Ausgänge angezeigt werden.

Die einzelnen Funktionen der Einzelsteuereinheit, die benötigt werden, z.B. Einzelsteuerungsglied für Motoren, Ventile usw. werden softwaremäßig im Speicher der Kopfbaugruppe hinterlegt und hardwaremäßig oder über Parametrierung von der Zentraleinheit aus vorgegeben und aufgerufen.

Hierdurch kann, je nach Ausbau, mit Peripheriebaugruppen, d.h. Ein-Ausgabebaugruppen, Signalformer usw., praktisch jede Steuerungsfunktion realisiert werden. Durch Zustecken von Eingangsbaugruppen können auch unterlagerte Handsteuergeräte angeschlossen oder zusätzliche Verriegelungen durchgeführt werden. Mit einer derartigen flexiblen und modularen Universaleinzelsteuerungsebene und Standardbaugruppen kann immer wieder mit der gleichen Hardware aber mit funktionsgerechter Software jede Einzelsteuerungsfunktion gelöst werden. Bei einem kompakten und gekapselten Aufbau kann die Einzelsteuereinheit auch direkt vor Ort im Prozeß installiert werden.

Zusammengefaßt bietet diese vorstehend geschilderte Einzelsteuerungseinheit gegenüber den herkömmlichen bekannten Einzelsteuergliedern folgende Vorteile: Je nach der Funktion ist ein modularer Ausbau mit Standardperipheriemodulen möglich. Durch den Anschluß der Einzelsteuereinheit als Peripheriebaugruppe ist keine teuere Ankopplung, wie z.B. über eine serielle Schnittstelle, erforderlich. Die Fehler können für Zentraleinheit und Einzelsteuereinheit getrennt diagnostiziert und angezeigt werden. Ebenso können beliebige Anzeigen auf der Ebene der Einzelsteuereinheit realisiert werden. Durch relativ einfache Erweiterung der Software ist auch eine Änderung bzw. Ergänzung der Einzelsteuerfunktionen möglich. Über Eingänge kann die Einzelsteuereinheit mit jeder Automatisierungseinheit gekoppelt werden.

Anhand eines in der Zeichnung dargestellten Ausführungsbeispiels sei die Erfindung näher erläutert; es zeigen:

Figur 1 das Prinzipschaltbild einer Steuereinrichtung,
Figur 2 die in einem Baugruppenträger zusammengefaßte Busanschaltung mit Einzelsteuereinheit und
Figur 3 den Programmspeicher der Kopfbaugruppe.

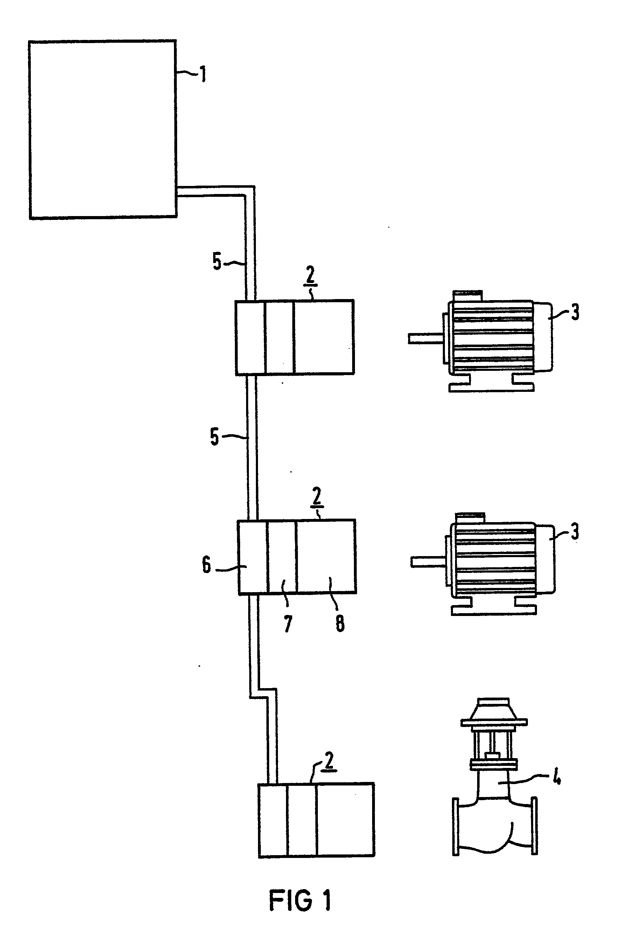

Wie aus Figur 1 ersichtlich, ist im Rahmen einer elektronischen Steuereinrichtung für einen Prozeß eine Zentraleinheit 1 vorgesehen, die z.B. aus einem Rechner oder einer speicherprogrammierbaren Steuerung bestehen möge. Diese Zentraleinheit 1 verkehrt über ein Bussystem 5 mit in Baugruppenträgern zusammengefaßten Steuergeräten 2 für beispielsweise Motoranordnungen 3 und Ventilanordnungen 4.

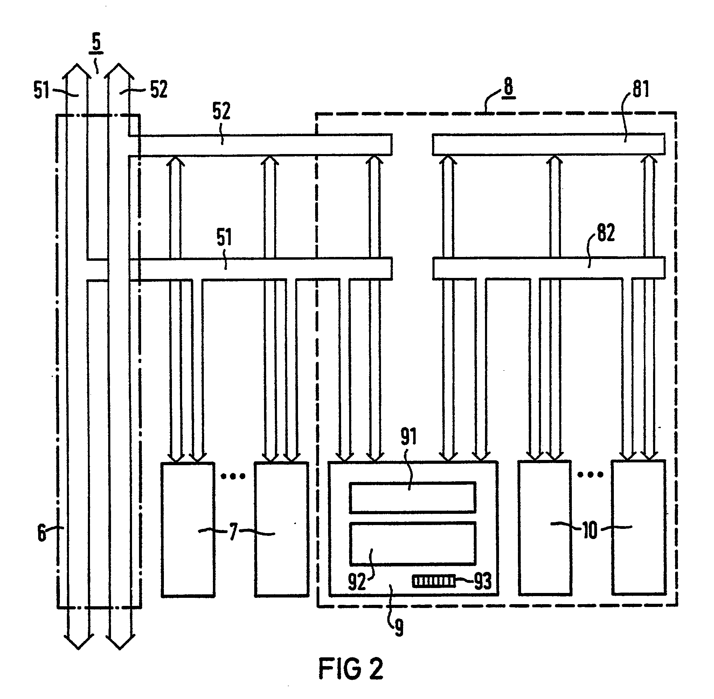

Wie aus Figur 2 ersichtlich, in der das Blockschaltbild der auf einen Baugruppenträger zusammengefaßten Geräte angedeutet ist, sind an dem aus Datenbus 51 und Adressbus 52 bestehenden Peripheriebus 5 über eine Baugruppenanschaltung 6 Ein-Ausgabebauglieder 7 angeschlossen, über die Signale von und zum Prozeß geleitet werden. Zusätzlich ist auf dem Baugruppenträger noch eine Einzelsteuereinheit 8 vorgesehen. Diese Einzelsteuereinheit 8 besteht aus einer Baugruppe 9, die einerseits an den Peripheriebus 5 angekoppelt ist und andererseits an den Datenbus 81 und den Adressbus 82 der Einzelsteuereinheit. An diesen Bussen 81 und 82 hängen nun wiederum Ein-Ausgabebaugruppen 10, die die einzelnen Stellglieder, wie z.B. Motoren 3, ansteuern. Die intelligente Baugruppe 9, die an den Verkehr zwischen der Zentraleinheit 91 und den Ein-Ausgabebaugruppen 10 vermittelt, besteht aus einer Zentraleinheit 91 in Form eines Prozessors und einem Programmspeicher 92, der neben dem Betriebssystem eine Reihe von Steuerungsfunktionen enthält. Durch einen Programmauswahlschalter 93 ist die gewünschte Steuerungsfunktion einstellbar.

Peripheriebus 5 und das Bussystem 81, 82 der Einzelsteuerungsebene sind mechanisch und elektrisch voneinander getrennt und stehen nur über die Baugruppe 9 miteinander in Verbindung.

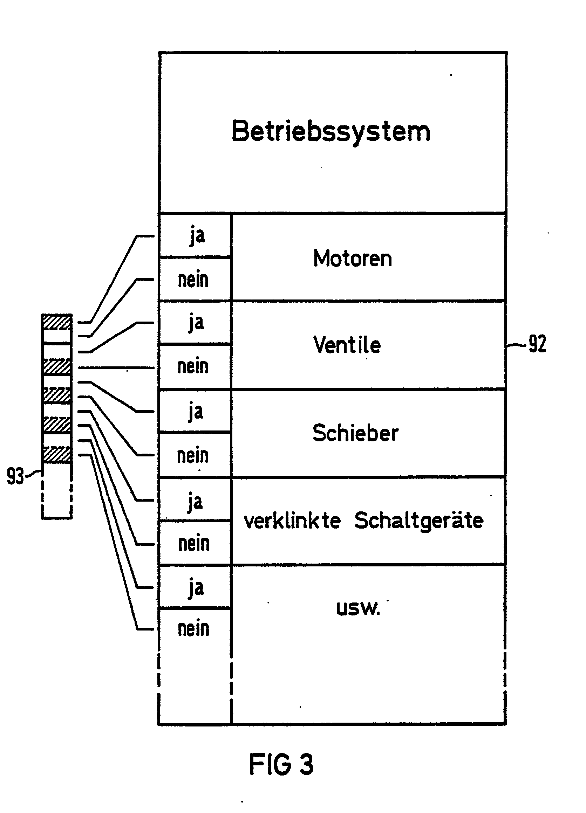

Figur 3 zeigt dem Programmspeicher 92 der Kopfbaugruppe 9, und zwar hinsichtlich der Belegung. Wie ersichtlich, ist neben der Software für das Betriebssystem auch Software zur Steuerung von Motoren, Ventilen, Schiebern, verklinkten Schaltgeräten usw. hinterlegt. Je nach der Stellung des Programmauswahlschalters 93 ist eines dieser Steuerungsprogramme wirksam; im hier vorliegenden Fall die Funktion zur Ansteuerung von Motoren.

## Patentanspruch

1. Elektronische Steuereinrichtung, bestehend aus
a) mindestens einer übergeordneten Zentraleinheit (1),
b) einzelnen Steuergeräten (2), die über ein Bussystem (5) mit der Zentraleinheit verbunden sind, wobei jedes Steuergerät (2) eine Busanschaltung (6) für das Bussystem (5), Ein- und Ausgabebaugruppen für zu steuernde Elemente (3, 4) und eine Einzelsteuereinheit (8) mit Prozessor (91) und Programmspeicher (92) enthält, in dem Steuerfunktionen hinterlegbar sind, gekennzeichnet durch folgende Merkmale:
c) an die Busanschaltung (6) sind die Ein- und Ausgabebaugruppen (7) und die Einzelsteuereinheit (8) angeschlossen, wobei die Einzelsteuereinheit (8) aus einer intelligenten, den Prozessor (91) und den Programmspeicher (92) enthaltenden Baugruppe (9) besteht, die einerseits an die Busanschaltung (6) angekoppelt ist und andererseits an das interne Bussystem (81, 82) der Einzelsteuereinheit,
d) an das interne Bussystem (81, 82) der Einzelsteuereinheit (8) sind weitere zur Einzelsteuereinheit gehörende Ein- und Ausgabebaugruppen (10) angeschlossen und
e) im Programmspeicher (92) der intelligenten Baugruppe (9) der Einzelsteuereinheit (8) sind eine Reihe von Steuerungsfunktionen hinterlegt, die durch die übergeordnete Zentraleinheit (1) und/oder einen Wahlschalter (93) in der intelligenten Baugruppe (9) der Einzelsteuereinheit aktivierbar sind.

## Claim

1. An electronic control system consisting of
a) at least one primary central unit (1),
b) individual control apparatus (2), which are connected to the central unit by way of a bus system, wherein each control apparatus (2) contains a bus interface (6) for the bus system (5), input and output modules for elements (3, 4) to be controlled and an individual control unit (8) with a processor (91) and program memory (92), in which the control functions are able to be stored, characterised by the following features:
c) the input and output modules (7) and the individual control unit (8) are attached to the bus interface (6), wherein the individual control unit (8) consists of an intelligent module (9) containing the processor (91) and the program memory (92), which is coupled, on the one hand, to the bus interface (6) and, on the other hand, to the internal bus system (81, 82) of the individual control unit,
d) further input and output modules (10) are attached to the internal bus system (81, 82) of the individual control unit (8) and
e) a series of control functions are stored in the program memory (92) of the intelligent module (9) of the individual control unit (8), which are able to be activated by the primary central unit (1) and/or a selector switch (93) in the intelligent module (9) of the individual control unit.

**Revendication**

1. Dispositif de commande électronique constitué par

a) au moins une unité centrale (1) de rang supérieur,

b) des appareils individuels de commande (2) reliés à l'unité centrale par l'intermédiaire d'un système de bus (5), chaque appareil de commande (2) contenant un circuit (6) de raccordement de bus pour le système de bus (5), des modules d'entrée et de sortie pour des éléments (3, 4) devant être commandés et une unité de commande individuelle (8) comportant un processeur (91) et une mémoire de programmes (92), dans laquelle peuvent être mémorisées des fonctions de commande, caractérisé par les particularités suivantes:

c) les modules d'entrée et de sortie (7) et l'unité de commande individuelle (8) sont raccordés au circuit (6) de raccordement de bus, l'unité de commande individuelle (8) étant constituée par un module intelligent (9), qui contient le processeur (91) et la mémoire de programmes (92) et est accouplé, d'une part, au circuit (6) de raccordement de bus, et, d'autre part, au système de bus interne (80, 82) de l'unité de commande individuelle,

d) d'autres modules d'entrée et de sortie (10), qui font partie de l'unité de commande individuelle (8), sont raccordés au système de bus interne (81, 82) de cette unité de commande individuelle, et

e) dans la mémoire de programmes (92) du module intelligent (9) de l'unité de commande individuelle (8) se trouvent mémorisées une série de fonctions de commande qui peuvent être activées par l'intermédiaire de l'unité centrale (1) de rang supérieur et/ou d'un commutateur de sélection (93) situé dans le module intelligent (9) de l'unité de commande individuelle.

FIG 1

FIG 2

**FIG 3**